(19) **Europäisches Patentamt**
**European Patent Office**
**Office européen des brevets**

(11) **EP 4 411 410 A1**

(12) **EUROPEAN PATENT APPLICATION**
published in accordance with Art. 153(4) EPC

(43) Date of publication:
**07.08.2024 Bulletin 2024/32**

(21) Application number: **22889120.6**

(22) Date of filing: **20.10.2022**

(51) International Patent Classification (IPC):
***G01S 5/08*** (2006.01)

(52) Cooperative Patent Classification (CPC):
**G01S 5/08**

(86) International application number:
**PCT/CN2022/126464**

(87) International publication number:
**WO 2023/078095 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2021 CN 202111287396**

(71) Applicants:
• **Huawei Technologies Co., Ltd.**
**Shenzhen, Guangdong 518129 (CN)**
• **Tsinghua University**
**Beijing 100084 (CN)**

(72) Inventors:
• **SHEN, Yuan**
**Beijing 100084 (CN)**
• **WANG, Bowen**
**Beijing 100084 (CN)**
• **QIU, Xinyou**
**Beijing 100084 (CN)**
• **DU, Zhenguo**
**Shenzhen, Guangdong 518129 (CN)**
• **LI, Xiaoxian**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **DISTANCE MEASUREMENT METHOD AND APPARATUS**

(57) A ranging method and apparatus are provided. The method includes: obtaining first measurement information and second measurement information (S410), where the first measurement information includes a plurality of groups of sampled data that are obtained by a first device by sampling retroreflection measurement signals received through a plurality of antenna channels of a single antenna, and the second measurement information includes a plurality of groups of sampled data that are obtained by a second device by sampling measurement signals received through a plurality of antenna channels of each of a plurality of antennas; and determining a distance between the first device and the second device based on the first measurement information and the second measurement information (S420). In this method, ranging is performed based on multi-antenna switching frequency hopping, so that a ranging delay meets a requirement, and ranging precision and robustness are improved.

400

S410: Obtain first measurement information and second measurement information

S420: Determine a distance between a first device and a second device based on the first measurement information and the second measurement information

FIG. 12

## Description

This application claims priority to Chinese Patent Application No. 202111287396.9, filed with the China National Intellectual Property Administration on November 2, 2021 and entitled "RANGING METHOD AND APPARATUS", which is incorporated herein by reference in its entirety.

## TECHNICAL FIELD

This application relates to the communication field, and in particular, to a ranging method and an apparatus.

## BACKGROUND

A ranging technology is increasingly used in daily life and brings great convenience and many changes to people's life. Currently, a ranging method is to perform frequency hopping on a plurality of frequencies to bidirectionally exchange a measurement signal. Because a phase of the measurement signal changes during propagation in the air, a distance may be calculated based on a relationship between a phase difference of different frequencies and a distance. However, a major disadvantage of this method is that signal propagation is easily affected by signal frequency selective fading, resulting in poor robustness.

## SUMMARY

This application provides a ranging method and an apparatus. The method can improve robustness of a ranging result.

According to a first aspect, a ranging method is provided. The method includes: obtaining first measurement information and second measurement information, where the first measurement information includes a plurality of groups of sampled data that are obtained by a first device by sampling retroreflection measurement signals received through a plurality of antenna channels of a single antenna, and the second measurement information includes a plurality of groups of sampled data that are obtained by a second device by sampling measurement signals received through a plurality of antenna channels of each of a plurality of antennas; and determining a distance between the first device and the second device based on the first measurement information and the second measurement information.

For example, the ranging method may be applied to the first device, the second device, or a third device. The third device may be a device independent of the first device and the second device.

For example, the ranging method may be specifically applied to a unit, in the first device, the second device, or the third device, having a processing function.

In the foregoing technical solution, the distance between the first device and the second device may be measured with reference to data collected on the plurality of antennas, so that a ranging delay meets a requirement, and ranging precision and robustness are improved.

With reference to the first aspect, in some implementations of the first aspect, the first measurement information further includes an antenna identifier and an antenna channel identifier that correspond to each group of sampled data obtained by the first device. The second measurement information further includes an antenna identifier and an antenna channel identifier that correspond to each group of sampled data obtained by the second device. The determining a distance between the first device and the second device based on the first measurement information and the second measurement information includes: selecting an available antenna channel of the first device based on the first measurement information, and selecting an available antenna channel of the second device based on the second measurement information, where the available antenna channel is a non-frequency selective fading channel; combining data collected by the first device and the second device through a same available antenna channel, to obtain target sampled data; fitting the target sampled data according to a sequence piecewise linear algorithm, to obtain at least one target fitted curve; and determining the distance between the first device and the second device based on the at least one target fitted curve.

The available antenna channel may be understood as that an amplitude of a measurement signal transmitted through the available antenna channel is not abnormally attenuated and/or a phase is not significantly distorted.

In the foregoing technical solution, considering that fading channels of different antennas are different, the available antenna channel of the first device is selected based on the first measurement information, and the distance between the first device and the second device is calculated according to the piecewise linear algorithm and based on the sampled data, so that a sampled data error caused by fading of some channels can be resisted, and the ranging precision can be further improved.

With reference to the first aspect, in some implementations of the first aspect, the selecting an available antenna channel of the first device based on the first measurement information includes: obtaining, based on the first measurement information, phase values corresponding to data collected by the first device through each antenna channel of the single antenna; performing linear fitting on the phase values corresponding to the data collected by the first device through each antenna channel of the single antenna, to obtain a fitted curve of the phase values corresponding to the data collected by the first device through each antenna channel; and selecting the available antenna channel of the first device based on a slope of the fitted curve of the phase values corresponding to the data collected by the first device through each antenna channel.

For example, if a slope of a fitted curve of phase values corresponding to data collected by the first device through a first antenna channel almost does not change, it may be considered that the first antenna channel is the available antenna channel of the first device.

A quantity of available antenna channels of the first device is not limited in embodiments of this application.

With reference to the first aspect, in some implementations of the first aspect, the selecting an available antenna channel of the first device based on the first measurement information includes: obtaining, based on the first measurement information, amplitudes corresponding to data collected by the first device through each antenna channel of the single antenna; calculating an average value of the amplitudes corresponding to the data collected by the first device through each antenna channel of the single antenna; and selecting the available antenna channel of the first device based on the average value of the amplitudes corresponding to the data collected by the first device through each antenna channel of the single antenna.

In the foregoing technical solution, considering consistency between channel fading and signal strength, an available antenna channel may be selected by using amplitudes corresponding to data collected through each antenna channel.

With reference to the first aspect, in some implementations of the first aspect, the selecting an available antenna channel of the second device based on the second measurement information includes: obtaining, based on the second measurement information, phase values corresponding to data collected by the second device through each antenna channel of each of the plurality of antennas; performing linear fitting on the phase values corresponding to the data collected by the second device through each antenna channel of each of the plurality of antennas, to obtain a fitted curve of the phase values corresponding to the data collected by the second device through each antenna channel; and selecting the available antenna channel of the second device based on a slope of the fitted curve of the phase values corresponding to the data collected by the second device through each antenna channel.

With reference to the first aspect, in some implementations of the first aspect, the selecting an available antenna channel of the second device based on the second measurement information includes: obtaining, based on the second measurement information, amplitudes corresponding to data collected by the second device through each antenna channel of the plurality of antennas; calculating an average value of the amplitudes corresponding to the data collected by the second device through each antenna channel of each of the plurality of antennas; and selecting the available antenna channel of the second device based on the average value of the amplitudes corresponding to the data collected by the second device through each antenna channel of each of the plurality of antennas.

With reference to the first aspect, in some implementations of the first aspect, the combining data collected by the first device and the second device through a same available antenna channel, to obtain target sampled data includes: adding phase values corresponding to the data collected by the first device and the second device through the same available antenna channel, to obtain the target sampled data.

With reference to the first aspect, in some implementations of the first aspect, when there are a plurality of target fitted curves, the determining the distance between the first device and the second device based on the at least one target fitted curve includes: determining a first target fitted curve of the plurality of target fitted curves as an optimal target fitted curve, where an average value of amplitudes corresponding to data that corresponds to the first target fitted curve and that is collected through a plurality of antenna channels is the largest; and determining the distance between the first device and the second device based on the optimal target fitted curve.

According to the foregoing technical solution, when there are the plurality of target fitted curves, the optimal target fitted curve is selected based on signal strength of a measurement signal transmitted through each antenna channel, and the distance between the first device and the second device is determined based on the optimal target fitted curve. In this way, the ranging precision can be further improved.

With reference to the first aspect, in some implementations of the first aspect, frequencies of measurement signals transmitted through a plurality of antenna channels corresponding to one of the plurality of antennas are partially the same as or different from frequencies of measurement signals transmitted through a plurality of antenna channels corresponding to another one of the plurality of antennas.

With reference to the first aspect, in some implementations of the first aspect, frequencies of a plurality of measurement signals transmitted through a plurality of antenna channels corresponding to each antenna are different.

According to a second aspect, a communication method is provided. The method is applied to a second device. The second device includes a plurality of antennas. Each of the plurality of antennas corresponds to a plurality of antenna channels. The method includes: receiving, through each of the plurality of antenna channels corresponding to each antenna based on a multi-antenna time division working mode and a frequency hopping mode of each antenna, a measurement signal sent by a first device; and sampling the measurement signal received through each antenna channel, to obtain a plurality of groups of sampled data, where the plurality of groups of sampled data are used to determine a distance between the first device and the second device.

The multi-antenna time division working mode may be understood as a specific working time of each antenna.

The frequency hopping mode of each antenna may be understood as a specific frequency for sending a measurement signal on each antenna.

For example, the second device includes a high-speed switch, and the method further includes: controlling, by using the high-speed switch, the plurality of antennas to work in a time division manner.

In the foregoing technical solution, the second device may measure the measurement signal by using the plurality of antennas, to obtain the plurality of groups of sampled data, so that the distance between the first device and the second device can be subsequently measured with reference to data collected on the plurality of antennas. In this way, a ranging delay meets a requirement, and ranging precision and robustness are improved.

With reference to the second aspect, in some implementations of the second aspect, frequencies of measurement signals transmitted through a plurality of antenna channels corresponding to one of the plurality of antennas are partially the same as or different from frequencies of measurement signals transmitted through a plurality of antenna channels corresponding to another one of the plurality of antennas.

With reference to the second aspect, in some implementations of the second aspect, frequencies of a plurality of measurement signals transmitted through a plurality of antenna channels corresponding to each antenna are different.

With reference to the second aspect, in some implementations of the second aspect, the method further includes: sending a retroreflection measurement signal to the first device through an antenna channel of the received measurement signal based on the multi-antenna time division working mode and the frequency hopping mode of each antenna.

With reference to the second aspect, in some implementations of the second aspect, the method further includes: obtaining first measurement information and second measurement information, where the first measurement information includes a plurality of groups of sampled data that are obtained by a first device by sampling retroreflection measurement signals received through a plurality of antenna channels of a single antenna, and the second measurement information includes a plurality of groups of sampled data that are obtained by a second device by sampling measurement signals received through a plurality of antenna channels of each of a plurality of antennas; and determining a distance between the first device and the second device based on the first measurement information and the second measurement information.

For example, the ranging method may be specifically applied to a unit, in the second device, having a processing function.

For example, the second device may store (or buffer) the plurality of groups of sampled data in a storage unit (or a buffer unit) of the second device. In this case, the second device may obtain the plurality of groups of sampled data, namely, the second measurement information, from the storage unit (or the buffer unit) of the second device.

In the foregoing technical solution, the second device may measure the distance between the first device and the second device with reference to data collected on the plurality of antennas, so that a ranging delay meets a requirement, and ranging precision and robustness are improved.

With reference to the second aspect, in some implementations of the second aspect, the first measurement information further includes an antenna identifier and an antenna channel identifier that correspond to each group of sampled data obtained by the first device. The second measurement information further includes an antenna identifier and an antenna channel identifier that correspond to each group of sampled data obtained by the second device. The determining a distance between the first device and the second device based on the first measurement information and the second measurement information includes: selecting an available antenna channel of the first device based on the first measurement information, and selecting an available antenna channel of the second device based on the second measurement information, where the available antenna channel is a non-frequency selective fading channel; combining data collected by the first device and the second device through a same available antenna channel, to obtain target sampled data; fitting the target sampled data according to a sequence piecewise linear algorithm, to obtain at least one target fitted curve; and determining the distance between the first device and the second device based on the at least one target fitted curve.

In the foregoing technical solution, considering that fading channels of different antennas are different, the second device selects the available antenna channel of the first device based on the first measurement information, and calculates the distance between the first device and the second device according to the piecewise linear algorithm and based on the sampled data, so that a sampled data error caused by fading of some channels can be resisted, and the ranging precision can be further improved.

With reference to the second aspect, in some implementations of the second aspect, the selecting an available antenna channel of the first device based on the first measurement information includes: obtaining, based on the first measurement information, phase values corresponding to data collected by the first device through each antenna channel of the single antenna; performing linear fitting on the phase values corresponding to the data collected by the first device through each antenna channel of the single antenna, to obtain a fitted curve of the phase values corresponding to the data collected by the first device through each antenna channel; and selecting the available antenna channel of the first device based on a slope of the fitted curve of the phase values corresponding to the data collected by the first device through each antenna channel.

For example, if a slope of a fitted curve of phase values corresponding to data collected by the first device through a first antenna channel almost does not change, it may be considered that the first antenna channel is the available antenna channel of the first device.

A quantity of available antenna channels of the first device is not limited in embodiments of this application.

With reference to the second aspect, in some implementations of the second aspect, the selecting an available antenna channel of the first device based on the first measurement information includes: obtaining, based on the first measurement information, amplitudes corresponding to data collected by the first device through each antenna channel of the single antenna; calculating an average value of the amplitudes corresponding to the data collected by the first device through each antenna channel of the single antenna; and selecting the available antenna channel of the first device based on the average value of the amplitudes corresponding to the data collected by the first device through each antenna channel of the single antenna.

In the foregoing technical solution, considering consistency between channel fading and signal strength, an available antenna channel may be selected by using amplitudes corresponding to data collected through each antenna channel.

With reference to the second aspect, in some implementations of the second aspect, the selecting an available antenna channel of the second device based on the second measurement information includes: obtaining, based on the second measurement information, phase values corresponding to data collected by the second device through each antenna channel of each of the plurality of antennas; performing linear fitting on the phase values corresponding to the data collected by the second device through each antenna channel of each of the plurality of antennas, to obtain a fitted curve of the phase values corresponding to the data collected by the second device through each antenna channel; and selecting the available antenna channel of the second device based on a slope of the fitted curve of the phase values corresponding to the data collected by the second device through each antenna channel.

With reference to the second aspect, in some implementations of the second aspect, the selecting an available antenna channel of the second device based on the second measurement information includes: obtaining, based on the second measurement information, amplitudes corresponding to data collected by the second device through each antenna channel of the plurality of antennas; calculating an average value of the amplitudes corresponding to the data collected by the second device through each antenna channel of each of the plurality of antennas; and selecting the available antenna channel of the second device based on the average value of the amplitudes corresponding to the data collected by the second device through each antenna channel of each of the plurality of antennas.

With reference to the second aspect, in some implementations of the second aspect, the combining data collected by the first device and the second device through a same available antenna channel, to obtain target sampled data includes: adding phase values corresponding to the data collected by the first device and the second device through the same available antenna channel, to obtain the target sampled data.

With reference to the second aspect, in some implementations of the second aspect, when there are a plurality of target fitted curves, the determining the distance between the first device and the second device based on the at least one target fitted curve includes: determining a first target fitted curve of the plurality of target fitted curves as an optimal target fitted curve, where an average value of amplitudes corresponding to data that corresponds to the first target fitted curve and that is collected through a plurality of antenna channels is the largest; and determining the distance between the first device and the second device based on the optimal target fitted curve.

According to a third aspect, a communication apparatus is provided. The apparatus is configured to perform the ranging method provided in the first aspect. Specifically, the apparatus may include units and/or modules configured to perform the ranging method provided in any one of the first aspect or the foregoing implementations of the first aspect, for example, a processing unit and/or a communication unit.

In an implementation, the apparatus is a first device, a second device, or a third device. When the apparatus is the first device, the second device, or the third device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit in the first device, the second device, or the third device. When the apparatus is the chip, the chip system, or the circuit in the first device, the second device, or the third device, the communication unit may be an input/output interface, an interface circuit, an output circuit, an input circuit, a pin, a related circuit, or the like on the chip, the chip system, or the circuit, and the processing unit may be at least one processor, a processing circuit, or a logic circuit.

According to a fourth aspect, a communication apparatus is provided. The apparatus is configured to perform the communication method provided in the second aspect. Specifically, the apparatus may include units and/or modules configured to perform the communication method provided in any one of the second aspect or the foregoing implementations of the second aspect, for example, a processing unit and/or a communication unit.

In an implementation, the apparatus is a second device. When the apparatus is the second device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit in the second device. When the apparatus is the chip, the chip system, or the circuit in the second device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided. The apparatus includes: a memory, configured to store a program; and at least one processor, configured to execute a computer program or instructions stored in the memory, to perform the ranging method provided in any one of the first aspect or the foregoing implementations of the first aspect.

In an implementation, the apparatus is a first device, a second device, or a third device.

In another implementation, the apparatus is a chip, a chip system, or a circuit in the first device, the second device, or the third device.

According to a sixth aspect, a communication apparatus is provided. The apparatus includes: a memory, configured to store a program; and at least one processor, configured to execute a computer program or instructions stored in the memory, to perform the communication method provided in any one of the second aspect or the foregoing implementations of the second aspect.

In an implementation, the apparatus is a second device.

In another implementation, the apparatus is a chip, a chip system, or a circuit in the second device.

According to a seventh aspect, this application provides a processor, configured to perform the ranging method provided in the first aspect, or configured to perform the communication method provided in the second aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable medium stores program code to be executed by a device. The program code is configured to perform the ranging method provided in any one of the first aspect or the foregoing implementations of the first aspect, or the program code is configured to perform the communication method provided in any one of the second aspect or the foregoing implementations of the second aspect.

According to a ninth aspect, a computer program product including instructions is provided. When the computer program product runs on a computer, the computer is enabled to perform the ranging method provided in any one of the first aspect or the foregoing implementations of the first aspect, or the computer is enabled to perform the communication method provided in any one of the second aspect or the foregoing implementations of the second aspect.

According to a tenth aspect, a chip is provided. The chip includes a processor and a communication interface. The processor reads, through the communication interface, instructions stored in a memory, to perform the ranging method provided in any one of the first aspect or the foregoing implementations of the first aspect, or perform the communication method provided in any one of the second aspect or the foregoing implementations of the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the ranging method provided in any one of the first aspect or the foregoing implementations of the first aspect, or the processor is configured to perform the communication method provided in any one of the second aspect or the foregoing implementations of the second aspect.

According to an eleventh aspect, a communication system is provided. The communication system includes a first device, a second device, and a third device. The third device is configured to perform the ranging method provided in any one of the first aspect or the foregoing implementations of the first aspect.

According to a twelfth aspect, a communication system is provided. The communication system includes a first device and a second device. The second device is configured to perform the communication method provided in any one of the second aspect or the foregoing implementations of the second aspect.

## BRIEF DESCRIPTION OF DRAWINGS

FIG. 1 is a schematic diagram of a structure of an example of a device according to an embodiment of this application;
FIG. 2 is a schematic diagram of measurement results of two antennas;

FIG. 3 is a schematic diagram of an example of a channel corresponding to each antenna of a device according to an embodiment of this application;

FIG. 4 is a schematic flowchart of a ranging method according to an embodiment of this application;

FIG. 5 is a schematic diagram in which a first device and a second device exchange signals for the first time according to an embodiment of this application;

FIG. 6 is a schematic diagram of a time sequence of sending a signal and receiving a signal by a first device and a second device according to an embodiment of this application;

FIG. 7 is a schematic flowchart of an example of calculating a distance between a first device and a second device according to an embodiment of this application;

FIG. 8 is a schematic diagram of phase fitting of an example of a signal transmitted by using an antenna A and on channels whose identifiers are 1 to 40 according to an embodiment of this application;

FIG. 9 is a schematic diagram of amplitude fitting of an example of a signal transmitted by using an antenna A and on channels whose identifiers are 1 to 40 according to an embodiment of this application;

FIG. 10 is a schematic diagram of linear fitting of a plurality of groups of distances between a first device and a second device;

FIG. 11 is another schematic diagram of linear fitting of a plurality of groups of distances between a first device and a second device;

FIG. 12 is a schematic flowchart of a ranging method according to an embodiment of this application;

FIG. 13 is a schematic flowchart of a communication method according to an embodiment of this application;

FIG. 14 is a schematic diagram of an apparatus according to an embodiment of this application; and

FIG. 15 is a schematic diagram of an apparatus according to an embodiment of this application.

**DESCRIPTION OF EMBODIMENTS**

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, a new radio (new radio, NR) system, or the like.

The device in embodiments of this application may be a terminal device. The terminal device may be user equipment, an access terminal, a subscriber unit, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

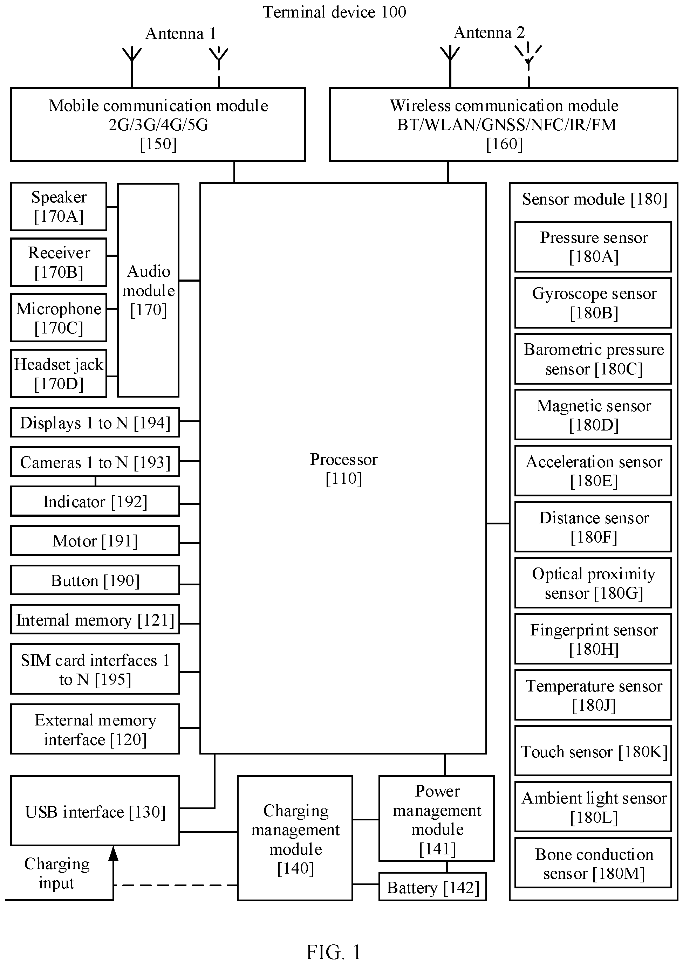

For example, FIG. 1 is a schematic diagram of a structure of an example of a terminal device 100 according to an embodiment of this application.

As shown in FIG. 1, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that, a structure illustrated in this embodiment of this application does not constitute a specific limitation on the terminal device 100. In some other embodiments of this application, the terminal device 100 may include more or fewer components than those shown in the figure, or some components may be combined, or some components may be split, or a different component deployment may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the terminal device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The I2C interface is a two-way synchronization serial bus, and includes one serial data line (serial data line, SDA) and one serial clock line (serial clock line, SCL). The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. The PCM interface may also be configured to: perform audio communication, and sample, quantize, and code an analog signal. In some embodiments, the audio module 170 may be coupled to the wireless communication module 160 through a PCM bus interface. The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. The MIPI interface may be configured to connect the processor 110 to a peripheral device such as the display 194 or the camera 193. The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The USB interface 130 is an interface that conforms to a USB standard specification, and may be specifically a mini USB interface, a micro USB interface, a USB type-C interface, or the like. The USB interface 130 may be configured to connect to a charger to charge the terminal device 100, or may be configured to transmit data between the terminal device 100 and a peripheral device.

It can be understood that an interface connection relationship between the modules illustrated in this embodiment of this application is merely an example for description, and does not constitute a limitation on the structure of the terminal device 100. In some other embodiments of this application, the terminal device 100 may alternatively use an interface connection manner different from that in the foregoing embodiment or a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the terminal device 100. The charging management module 140 may further supply power to an electronic device by using the power management module 141 while charging the battery 142. The power management module 141 is configured to connect to the battery 142, the charging management module 140, and the processor 110.

A wireless communication function of the terminal device 100 may be implemented by using the antenna 1, the antenna 2, the mobile communication module 150, the wireless communication module 160, the modem processor, the baseband processor, and the like.

The mobile communication module 150 may provide a solution, applied to the terminal device 100, to wireless communication including 2G, 3G, 4G, 5G, and the like.

In some embodiments, the modem processor may be an independent device. In some other embodiments, the modem processor may be independent of the processor 110, and is disposed in a same device as the mobile communication module 150 or another functional module.

The wireless communication module 160 may provide a solution, applied to the terminal device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC) technology, an infrared (infrared, IR) technology, or the like.

In some embodiments, the antenna 1 of the terminal device 100 is coupled to the mobile communication module 150, and the antenna 2 is coupled to the wireless communication module 160, so that the terminal device 100 can communicate with a network and another device by using a wireless communication technology.

The terminal device 100 implements a display function by using the GPU, the display 194, the application processor, and the like. The GPU is a microprocessor for image processing and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), or may be a display panel made of one of materials such as an organic light-emitting diode (organic light-emitting diode, OLED), an active-matrix organic light-emitting diode (active-matrix organic light-emitting diode, AMOLED), a flexible light-emitting diode (flex light-emitting diode, FLED), Miniled, MicroLed, a Micro-oLed, or a quantum dot light-emitting diode (quantum dot light-emitting diode, QLED). In some embodiments, the terminal device 100 may include 1 or N displays 194, where N is a positive integer greater than 1.

The terminal device 100 may implement a photographing function by using the ISP, the camera 193, the video codec, the GPU, the display 194, the application processor, and the like.

The external memory interface 120 may be configured to connect to an external memory card such as a micro SD card, to extend a storage capability of the terminal device 100. The internal memory 121 may be configured to store computer-executable program code. The executable program code includes instructions. The processor 110 runs the instructions stored in the internal memory 121, to perform various function applications and data processing of the terminal device 100.

The terminal device 100 may implement an audio function such as music playing or recording through the audio module 170, the speaker 170A, the receiver 170B, the microphone 170C, the headset jack 170D, the application processor, and the like. The audio module 170 is configured to convert digital audio information into an analog audio signal output, and is also configured to convert analog audio input into a digital audio signal. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. The gyroscope sensor 180B may be configured to determine a moving posture of the terminal device 100. The barometric pressure sensor 180C is configured to measure barometric pressure. In some embodiments, the terminal device 100 calculates an altitude based on a barometric pressure value measured by the barometric pressure sensor 180C, to assist in positioning and navigation. The acceleration sensor 180E may detect values of accelerations of the terminal device 100 in various directions (usually on three axes). The distance sensor 180F is configured to measure a distance. The fingerprint sensor 180H is configured to collect a fingerprint. The touch sensor 180K is also referred to as a "touch panel". The touch sensor 180K may be disposed on the display 194. The touch sensor 180K and the display 194 form a touchscreen, which is also referred to as a "touchscreen". The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal.

The button 190 includes a power button, a volume button, and the like. The motor 191 may generate a vibration prompt. The indicator 192 may be an indicator light, and may indicate a charging status and a power change, or may indicate a message, a missed call, a notification, and the like. The SIM card interface 195 is configured to connect to a SIM card.

Currently, common ranging methods may be roughly classified into three types: a signal strength-based ranging method, a time-based ranging method, and a phase-based ranging method. In the signal strength-based ranging method, a signal is continuously attenuated with a propagation distance in a propagation process, and an attenuation degree may be roughly depicted by a distance fading formula. This method is severely affected by an environment, especially when a multi-path, non-line-of-sight, and electromagnetic interference are flooded indoors, and signal strength actually measured at a same distance changes greatly. In the time-based ranging method, a time of arrival, a time difference of arrival, or a round-trip time is measured to achieve a ranging objective. However, this method has extremely high requirements on hardware, usually requires clock precision of a nanosecond level, and requires a signal to have large bandwidth to ensure acceptable precision, which are difficult to be met by a common communication device. In the phase-based ranging method, a phase offset of a signal in a flight process is measured to calculate a distance. This method does not have a high requirement on hardware precision, and may also be implemented on a low-cost Bluetooth device. Therefore, robustness of this method is much higher than that of the signal strength-based ranging method. Therefore, the phase-based ranging method is an ideal ranging method.

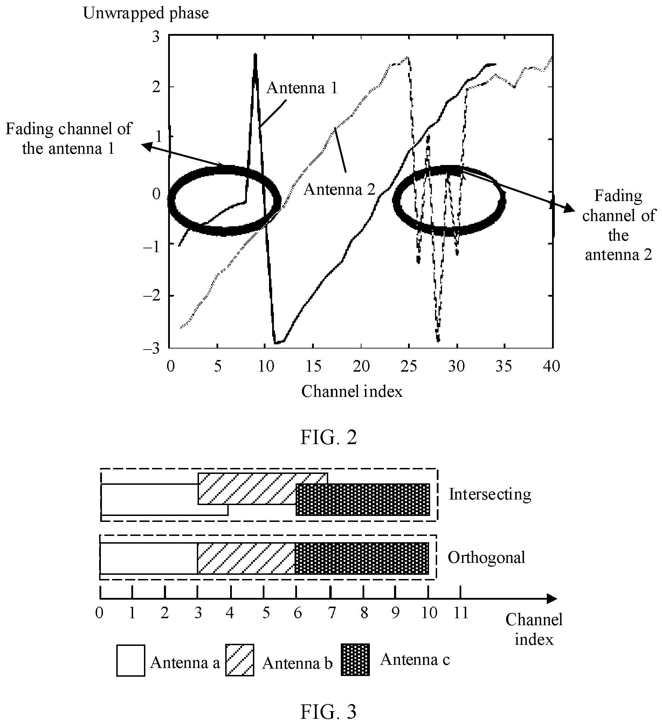

In the phase-based ranging method, frequency hopping on a plurality of frequencies and bidirectional exchange are required to measure a phase change of a signal during propagation in the air. There is a correspondence between a phase difference of different frequencies and a distance. Then, receiving and sending distances are calculated according to the congruential theorem. However, a major disadvantage of this method is that signal propagation is easily affected by signal frequency selective fading, and stability is poor. A typical case is that during measurement, fading of some channels causes a severe error in a signal, and the signal is unavailable. For example, FIG. 2 shows measurement results of two antennas (an antenna 1 and an antenna 2). A horizontal axis is a channel index, namely, a quantity of channels, for frequency hopping measurement, and a vertical axis is an unwrapped phase. As shown in FIG. 2, fading occurs on channels, of the antenna 1, corresponding to an ellipse on a left side in FIG. 2. Fading occurs on channels, of the antenna 2, corresponding to an ellipse on a right side in FIG. 2. It can be learned that fading occurs on some channels of the two antennas. In addition, different antennas have different fading channels.

Therefore, this application provides a ranging method. The method can improve robustness of a ranging result.

It should be understood that a channel in this application may also be referred to as an antenna channel.

The ranging method may be applied to a communication system that includes at least two devices. One device (for example, a second device described below) is configured with a plurality of antennas, and another device (for example, a first device described below) is configured with one antenna.

A manner of connection between the two devices is not limited in embodiments of this application. For example, the two devices may be connected by using Bluetooth.

It should be noted that when the two devices are connected by using Bluetooth to measure a distance between the two devices, the ranging method further maintains many advantages of Bluetooth ranging, for example, low power consumption, low costs, and high popularity.

In the following embodiments, an example in which the first device is used as an active party, and the second device is used as a passive party is used to describe the ranging method provided in embodiments of this application. It should be understood that, in some embodiments, the first device may be used as a passive party, and the second device may be used as an active party. The active party may be understood as a party that sends a ranging request, and the passive party may be understood as a party that receives the ranging request, and/or, the active party may be understood as a party that first sends a signal, and the passive party may be understood as a party that sends a signal later, that is, a party that sends a retroreflection signal after receiving the signal.

In the following embodiments, an example in which the first device is configured with a first antenna, and the second device is configured with a second antenna and a third antenna is used to describe the ranging method provided in embodiments of this application.

In addition, the second device is further configured with a switching mode. After collecting, by using a target antenna, a signal on a channel corresponding to the target antenna, the second device switches to another antenna to continue to collect a signal until signals on all channels are collected. Each channel corresponds to one frequency. In other words, signals sent through different channels have different frequencies.

Channels corresponding to different antennas may partially overlap (intersect), completely overlap, or completely do not overlap (orthogonal). This is not limited in this application.

FIG. 3 is a schematic diagram of an example of a channel corresponding to each antenna of a device according to an embodiment of this application. As shown in FIG. 3, if the device is configured with an antenna a, an antenna b, and an antenna c, channels corresponding to the antenna a, the antenna b, and the antenna c may be orthogonal or intersect.

A quantity of channels corresponding to each antenna is not limited in this embodiment of this application.

To improve accuracy of a measurement result of ranging, a plurality of channels corresponding to each antenna are usually disposed.

In the following embodiments, an example in which channels corresponding to the second antenna of the second device are a first channel and a second channel, and channels corresponding to the third antenna are a second channel and a third channel is used to describe the ranging method provided in embodiments of this application.

The following describes the ranging method provided in embodiments of this application with reference to the accompanying drawings.

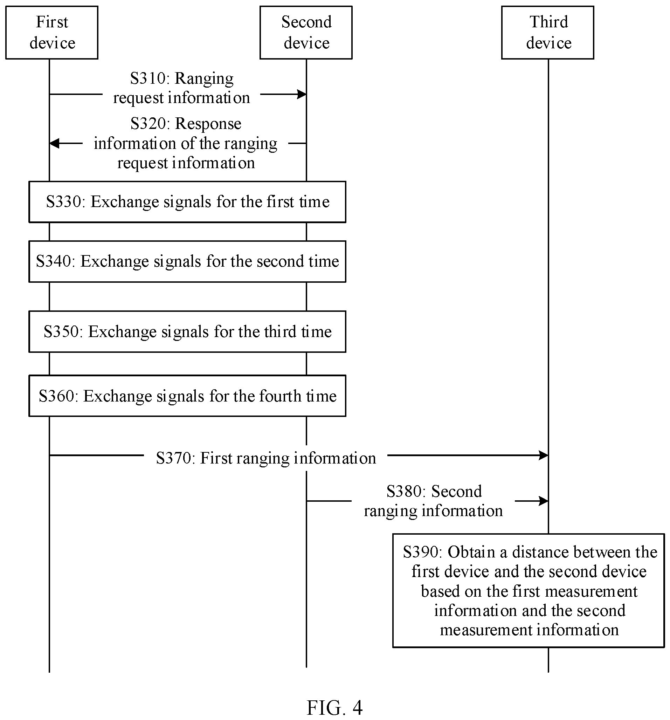

FIG. 4 is a schematic flowchart of a ranging method 300 according to an embodiment of this application.

S310: A first device sends ranging request information to a second device.

Correspondingly, the second device receives the ranging request information of the first device.

The ranging request information indicates an event number of a future event. The event number may be understood as a number of the event.

When an executed event number reaches the event number, that is, when the event arrives, both parties, namely, a sender and a receiver of the event number, start to exchange constant tone extension (constant tone extension, CTE) (or referred to as single tone extension) signals, that is, S303.

It should be understood that a first signal, a second signal, and a third signal that are transmitted between the first device and the second device in the following are all CTE signals.

Optionally, after S301, the method 300 may further include S302.

S320: The second device sends response information of the ranging request information to the first device.

Correspondingly, the first device receives the response information of the ranging request information sent by the second device.

The response information of the ranging information indicates that the second device has received the ranging request information, and/or the second device is ready to receive a signal.

After S320, the first device and the second device need to transmit a measurement signal on a plurality of channels. For example, a specific exchange process in which the first device and the second device need to transmit a measurement signal on a plurality of channels may include S330 to S360.

For ease of description, the measurement signal is simplified as a signal in the following.

S330: The first device and the second device start to exchange signals for the first time.

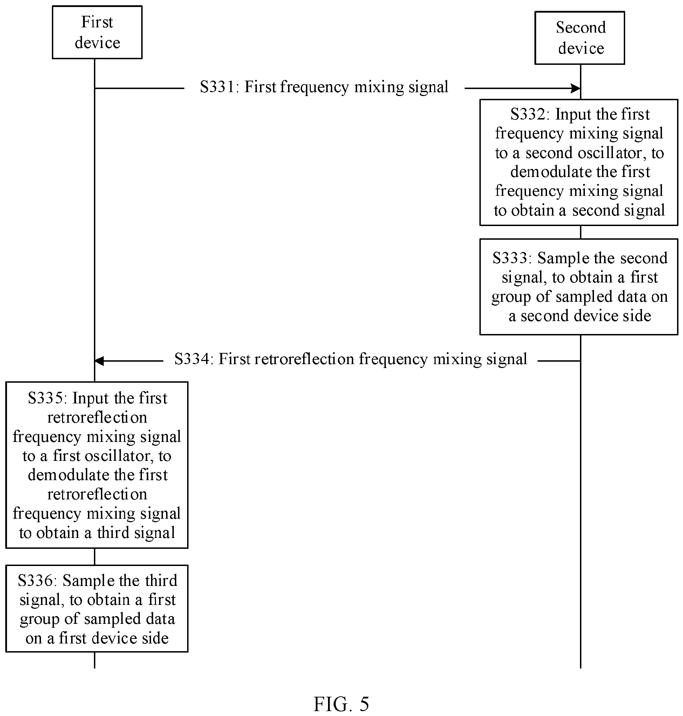

FIG. 5 is a schematic diagram in which a first device and a second device exchange signals for the first time according to an embodiment of this application. As shown in FIG. 5, S330 includes S331 to S336. The following specifically describes S331 to S336.

S331: The first device sends a first frequency mixing signal to the second device.

For example, the first device sends the first frequency mixing signal to the second device by using a first antenna and through a first channel.

To ensure that initial phase differences of signals transmitted by the first device to the second device are the same, a first oscillator may be disposed in the first device, and the first oscillator keeps oscillating continuously. The first device inputs the first signal to the first oscillator, to modulate the first signal to obtain the first frequency mixing signal.

In this case, if a phase of the first signal on a first device side is 0, a phase of the first frequency mixing signal is a phase generated by the first oscillator.

In some embodiments, to ensure that frequencies of a signal sent on and a retroreflection signal received on the first device side are the same, a corresponding device, for example, a phase-locked loop, may be usually disposed in the first device.

Correspondingly, the second device receives the first frequency mixing signal sent by the first device.

Specifically, the second device receives, by using a second antenna and through the first channel, the first frequency mixing signal sent by the first device.

Similarly, to ensure that initial phase differences of signals transmitted between the second device and the first device are the same, a second oscillator may be disposed in the second device, and the second oscillator keeps oscillating continuously.

S332: The second device inputs the first frequency mixing signal to the second oscillator, to demodulate the first frequency mixing signal to obtain the second signal.

For example, if the phase of the first signal on the first device side is 0, and an initial phase generated by the first oscillator is $\theta_1$, a phase of the second signal obtained by the second device is $\phi_{T1}$, which satisfies the following formula (1):

$$\phi_{T1}(f_{k1}, d) = -2\pi f_{k1}\left(\frac{d}{c} - \Delta t\right) + \theta_2 - \theta_1 \quad (1),$$

where
$\theta_1$ is an initial phase of the first frequency mixing signal sent by the first device, $\theta_2$ is an initial phase generated by the second oscillator of the second device, $f_{k1}$ is a frequency of the first signal, d is a distance between the first device and the second device, c is a speed at which the first signal is propagated in vacuum or a medium, and $\Delta t$ is a clock offset between the first device and the second device.

S333: The second device samples the second signal, to obtain a first group of sampled data on a second device side. The first group of sampled data on the second device side includes one or more pieces of data obtained by sampling the second signal.

In this case, the second device may store the first group of sampled data on the second device side.

S334: The second device sends a first retroreflection frequency mixing signal to the first device.

For example, the second device sends the first retroreflection frequency mixing signal to the first device by using the second antenna and through the first channel.

Specifically, the second device modulates the second signal by using the second oscillator, to obtain the first retroreflection frequency mixing signal, and sends the first retroreflection frequency mixing signal to the first device by using the second antenna and through the first channel.

Similarly, in some embodiments, to ensure that frequencies of a signal received on and a retroreflection signals sent on the second device side are the same, a corresponding device, for example, a phase-locked loop, may be usually disposed in the second device. In this way, frequencies of the first retroreflection frequency mixing signal and the first frequency mixing signal are consistent.

Correspondingly, the first device receives the first retroreflection frequency mixing signal sent by the second device.

For example, the first device receives, by using the first antenna and through the first channel, the first retroreflection frequency mixing signal sent by the second device.

S335: The first device inputs the first retroreflection frequency mixing signal to the first oscillator, to demodulate the first retroreflection frequency mixing signal to obtain the third signal.

For example, a phase of the third signal obtained by the first device is $\phi_{R1}$, which satisfies the following formula (2):

$$\phi_{R1}(f_{k1}, d) = -2\pi f_{k1}\left(\frac{d}{c} + \Delta t\right) + \theta_1 - \theta_2$$

S336: The first device samples the third signal, to obtain a first group of sampled data on the first device side. The first group of sampled data on the first device side includes one or more pieces of data obtained by sampling the third signal.

In this case, the first device may store the first group of sampled data on the first device side.

After S330, the first device and the second device start to exchange signals for the second time, that is, S340.

In this case, a process in which the first device and the second device exchange signals for the second time is similar to a process in which the first device and the second device exchange signals for the first time, with the following differences: 1. The first device sends the first frequency mixing signal to the second device by using the first antenna and through the second channel. 2. The second device receives, by using the second antenna and through the second channel, the first frequency mixing signal sent by the first device. 3. After the second device sends the first retroreflection signal to the first device, because signals of all channels corresponding to the second antenna have been collected, the second device needs to switch an antenna for receiving a signal from the second antenna to a third antenna. For other descriptions, refer to the foregoing descriptions of S331 to S336. Details are not described herein again.

A high-speed switch may be disposed in the second device to control different antennas to work in a time division manner.

It should be understood that, in this embodiment of this application, an antenna switching time is between a data sampling time and a signal sending time.

A specific form of the time is not limited in this embodiment of this application.

For ease of description, in this case, data collected by the second device is denoted as a second group of data collected on the second device side, and data collected by the first device is denoted as a second group of data collected on the first device side.

After the first device and the second device exchange signals for the second time, the first device and the second device start to exchange signals for the third time, that is, S350.

In this case, a process in which the first device and the second device exchange signals for the third time is similar to the process in which the first device and the second device exchange signals for the first time, with differences as follows: 1. The first device sends the first frequency mixing signal to the second device by using the first antenna and through the second channel. 2. The second device receives, by using the third antenna and through the second channel, the first frequency mixing signal sent by the first device. For other descriptions, refer to the foregoing descriptions of S331 to S336. Details are not described herein again.

For ease of description, in this case, data collected by the second device is denoted as a third group of data collected on the second device side, and data collected by the first device is denoted as a third group of data collected on the first device side.

After the first device and the second device exchange signals for the third time, the first device and the second device start to exchange signals for the fourth time, that is, S360.

In this case, a process in which the first device and the second device exchange signals for the fourth time is similar to the process in which the first device and the second device exchange signals for the first time, with differences as follows: 1. The first device sends the first frequency mixing signal to the second device by using the first antenna and through a third channel. 2. The second device receives, by using the third antenna and through the third channel, the first frequency mixing signal sent by the first device. For other descriptions, refer to the foregoing descriptions of S331 to S336. Details are not described herein again.

For ease of description, in this case, data collected by the second device is denoted as a fourth group of data collected on the second device side, and data collected by the first device is denoted as a fourth group of data collected on the first device side.

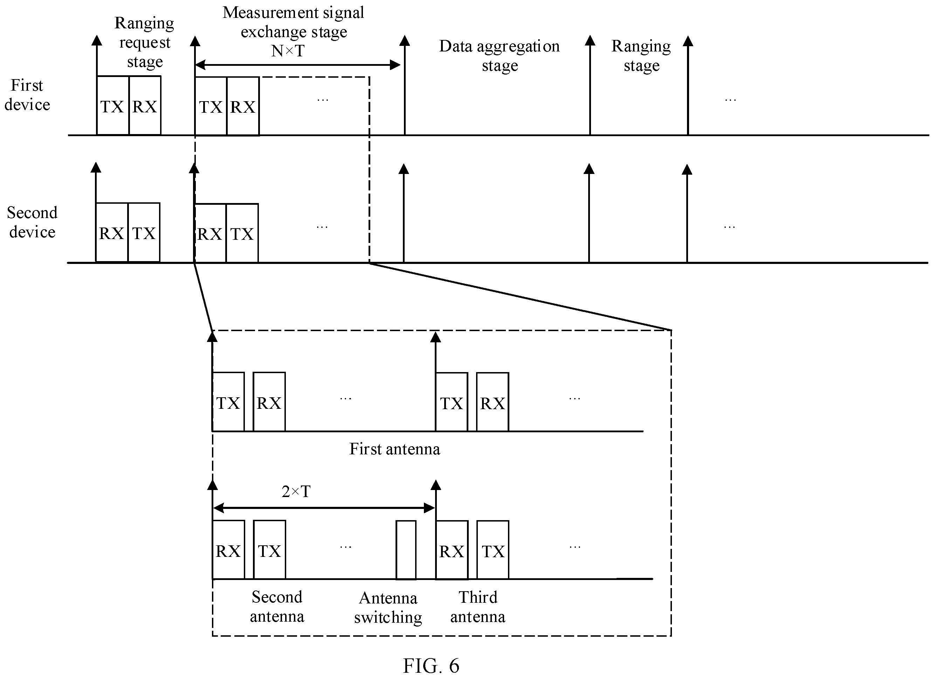

FIG. 6 is a schematic diagram of a time sequence of sending a signal and receiving a signal by a first device and a second device according to an embodiment of this application. As shown in FIG. 6, TX is transmit (transmit), and RX is receive (receive). N is a quantity of channels, namely, a quantity of frequency modulations, and T is a time required for measurement signal exchange on a channel.

Because the first device is configured with one antenna, namely, the first antenna, as shown in FIG. 6, the first device does not need to switch an antenna. In other words, the first device always exchanges a measurement signal by using the first antenna.

Because the second device is configured with two antennas, namely, the second antenna and the third antenna, as shown in FIG. 6, the second device needs to switch an antenna after exchanging a measurement signal of the second channel by using the second antenna, and subsequently, the second device exchanges a measurement signal by using the third antenna. It can be learned that antenna switching is performed within a frequency hopping time. In other words, an antenna switching time is between a data sampling time and a signal sending time. After the first device and the second device exchange signals for the fourth time, the first device and the second device may separately send collected data to the third device, so that the third device calculates the distance between the first device and the second device. For a specific detailed process, refer to S370 to S390.

In some embodiments, the third device and the first device may be one device. In some other embodiments, the third device and the second device are one device. In still some other embodiments, the third device is independent of the first device and the second device.

S370: The first device sends first measurement information to the third device.

The first measurement information includes an event number corresponding to sampled data and data collected on the first device side.

The data collected on the first device side includes: the first group of sampled data on the first device side and an antenna identifier and a channel identifier corresponding to the first group of sampled data; a second group of sampled data on the first device side and an antenna identifier and a channel identifier corresponding to the second group of sampled data; a third group of sampled data on the first device side and an antenna identifier and a channel identifier corresponding to the third group of sampled data; and a fourth group of sampled data on the first device side and an antenna identifier and a channel identifier corresponding to the fourth group of sampled data.

The first group of sampled data on the first device side includes sampled data of the first signal on the first device side and sampled data of the first retroreflection signal on the first device side.

The second group of sampled data on the first device side includes sampled data of the second signal on the first device side and sampled data of a second retroreflection signal on the first device side.

The third group of sampled data on the first device side includes sampled data of the third signal on the first device side and sampled data of a third retroreflection signal on the first device side.

The fourth group of sampled data on the first device side includes sampled data of a fourth signal on the first device side and sampled data of a fourth retroreflection signal on the first device side.

The antenna identifier corresponding to the first group of sampled data on the first device side, the antenna identifier corresponding to the second group of sampled data on the first device side, the antenna identifier corresponding to the third group of sampled data on the first device side, and the antenna identifier corresponding to the fourth group of sampled data on the first device side are all identifiers of the first antenna.

The channel identifier corresponding to the first group of sampled data on the first device side is an identifier of the first channel. The channel identifier corresponding to the second group of sampled data on the first device side is an identifier of the second channel. The channel identifier corresponding to the third group of sampled data on the first device side is the identifier of the second channel. The channel identifier corresponding to the fourth group of sampled data on the first device side is an identifier of the third channel.

S380: The second device sends second measurement information to the third device.

The second measurement information includes an event number corresponding to sampled data and data collected on the second device side.

The data collected on the second device side includes: the first group of sampled data on the second device side and an antenna identifier and a channel identifier corresponding to the first group of sampled data; a second group of sampled data on the second device side and an antenna identifier and a channel identifier corresponding to the second group of sampled data; a third group of sampled data on the second device side and an antenna identifier and a channel identifier corresponding to the third group of sampled data; and a fourth group of sampled data on the second device side and an antenna identifier and a channel identifier corresponding to the fourth group of sampled data.

The first group of sampled data on the second device side includes sampled data of the first signal on the second device side and sampled data of the first retroreflection signal on the second device side.

The second group of sampled data on the second device side includes sampled data of the second signal on the second device side and sampled data of the second retroreflection signal on the second device side.

The third group of sampled data on the second device side includes sampled data of the third signal on the second device side and sampled data of the third retroreflection signal on the second device side.

The fourth group of sampled data on the second device side includes sampled data of the fourth signal on the second device side and sampled data of the fourth retroreflection signal on the second device side.

Both the antenna identifier corresponding to the first group of sampled data on the second device side and the antenna identifier corresponding to the second group of sampled data on the second device side are identifiers of the second antenna.

Both the antenna identifier corresponding to the third group of sampled data on the second device side and the antenna identifier corresponding to the fourth group of sampled data on the second device side are identifiers of the third antenna.

The channel identifier corresponding to the first group of sampled data on the second device side is the identifier of the first channel. The channel identifier corresponding to the second group of sampled data on the second device side is the identifier of the second channel. The channel identifier corresponding to the third group of sampled data on the second device side is the identifier of the second channel. The channel identifier corresponding to the fourth group of sampled data on the second device side is the identifier of the third channel.

A specific form of the sampled data is not limited in this embodiment of this application. For example, the sampled data may be recorded waveform diagram data.

A specific form of the antenna identifier is not limited in this embodiment of this application. For example, the antenna identifier may alternatively be implemented by using an antenna index.

S390: The third device calculates the distance between the first device and the second device based on the first measurement information and the second measurement information.

In some embodiments, the third device may implement S370 according to a piecewise linear algorithm.

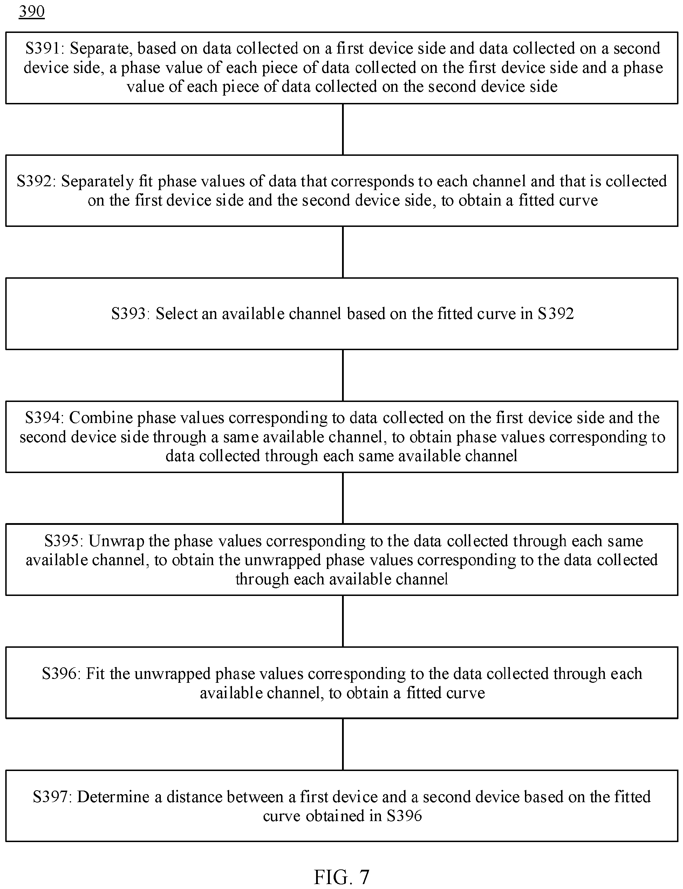

FIG. 7 is a schematic flowchart of an example of calculating a distance between a first device and a second device according to an embodiment of this application.

As shown in FIG. 7, S390 specifically includes S391 to S397. The following describes S391 to S397 in detail.

S391: Separate, based on the data collected on the first device side and the data collected on the second device side, a phase value of each piece of data collected on the first device side and a phase value of each piece of data collected on the second device side.

For example, phase values of the first group of data collected on the second device side are $\phi_{T1i}$. Phase values of the second group of data collected on the second device side are $\phi_{T2j}$. Phase values of the third group of data collected on the second device side are $\phi_{T3k}$. Phase values of the fourth group of data collected on the second device side are $\phi_{T4m}$. Phase values of the first group of data collected on the first device side are $\phi_{R1i}$. Phase values of the second group of data collected on the first device side are $\phi_{R2j}$. Phase values of the third group of data collected on the first device side are $\phi_{R3k}$. Phase values of the fourth group of data collected on the first device side are $\phi_{R4m}$. $i$ is a quantity of data included in the first group of data, $j$ is a quantity of data included in the second group of data, $k$ is a quantity of data included in the third group of data, and $m$ is a quantity of data included in the fourth group of data, where $i, j, k,$ and $m$ are positive integers.

Optionally, in some embodiments, in S391, an amplitude of each piece of data collected on the first device side and an amplitude of each piece of data collected on the second device side may be further separated based on the data collected on the first device side and the data collected on the second device side.

S392: Separately fit phase values of data that corresponds to each channel and that is collected on the first device side and the second device side, to obtain a fitted curve.

Data that corresponds to the first channel and that is collected on the first device side includes the first group of data collected on the first device side. Data that corresponds to the second channel and that is collected on the first device side includes the second group of data and the third group of data that are collected on the first device side. Data that corresponds to the third channel and that is collected on the first device side includes the fourth group of data collected on the first device side. In this way, after S392, three fitted curves can be obtained by fitting the phase values of the data that corresponds to each channel and that is collected on the first device side.

Data that corresponds to the first channel and that is collected on the second device side includes the first group of data collected on the second device side. Data that corresponds to the second channel and that is collected on the second device side includes the second group of data and the third group of data that are collected on the second device side. Data that corresponds to the third channel and that is collected on the second device side includes the fourth group of data collected on the second device side. In this way, after S392, three fitted curves can be obtained by fitting the phase values of the data that corresponds to each channel and that is collected on the second device side.

S393: Select an available channel based on the fitted curve in S392.

The available channel may be understood as a non-frequency selective fading channel. In other words, an amplitude of a measurement signal transmitted through the available antenna channel is not abnormally attenuated and/or a phase is not significantly distorted.

For example, it may be determined whether a slope of the fitted curve changes steadily. If the slope of the fitted curve changes steadily, the channel is an available channel. If the slope of the fitted curve changes abruptly, the channel is an unavailable channel. In this case, it may be considered that the channel has a fading phenomenon.

For ease of description, the following describes an example in which available channels on the first device side and the second device side include all channels, namely, the first channel, the second channel, and the third channel.

Channel fading is consistent with strength (an amplitude) of a signal transmitted on a channel.

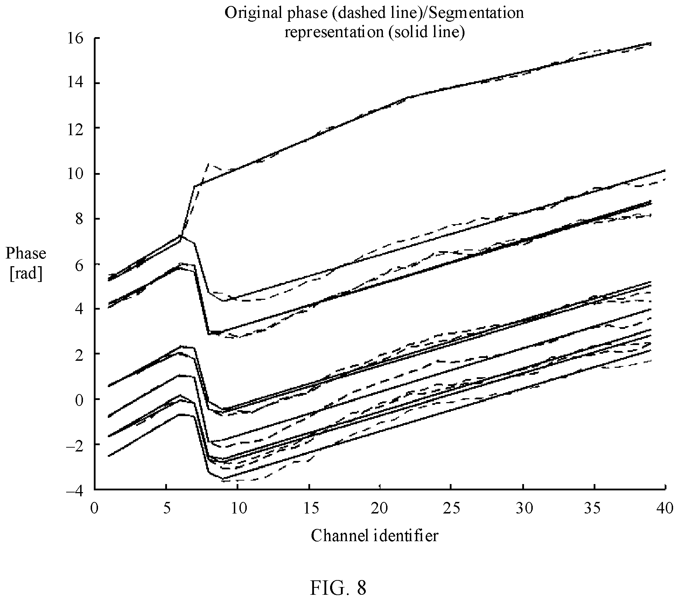

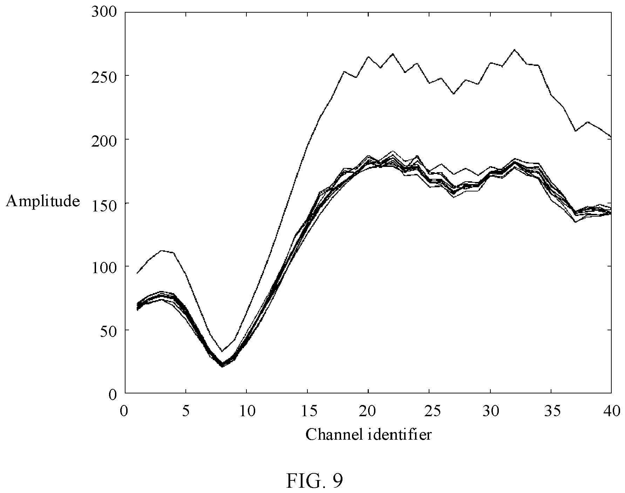

The following uses FIG. 8 and FIG. 9 as examples to describe a relationship between channel fading and strength of a signal transmitted on a channel. FIG. 8 is a schematic diagram of phase fitting of an example of a signal transmitted by using an antenna A and on channels whose identifiers are 1 to 40 according to an embodiment of this application. FIG. 9 is a schematic diagram of amplitude fitting of an example of a signal transmitted by using an antenna A and on channels whose identifiers are 1 to 40 according to an embodiment of this application.

It can be learned from FIG. 8 that, channel fading occurs on channels whose channel identifiers are 6 to 8 for the antenna A. In other words, available channels for the antenna A are 1 to 5 and 9 to 40. It can be learned from FIG. 9 that an amplitude (strength) of a signal transmitted by using the antenna A and on channels whose channel identifiers are 6 to 8 decreases. It can be learned that channel fading is consistent with strength (an amplitude) of a signal transmitted on a channel. In other words, the strength of the signal transmitted on the fading channel also fades.

In another implementation, if the amplitude of each piece of data collected on the first device side and the amplitude of each piece of data collected on the second device side are obtained in S391, S392 and S3 93 may be replaced with S392' and S393'.

S3 92': Separately calculate an average value of amplitudes of the data that corresponds to each channel and that is collected on the first device side and the second device side.

For descriptions of the data that corresponds to each channel and that is collected on the first device side and the second device side, refer to related descriptions in S392. Details are not described herein again.

After S392, there are respectively three average values of the amplitudes of the data that corresponds to each channel and that is collected on the first device side and the second device side.

S3 93': Select an available channel based on the average value that is of the amplitudes of the data corresponding to each channel and that is obtained in S3 92'.

For example, it may be determined whether the average value of the amplitudes of the data corresponding to the channel is greater than or equal to a first preset value. If the average value of the amplitudes of the data corresponding to the channel is greater than or equal to the first preset value, the channel is an available channel. If the average value of the amplitudes of the data corresponding to the channel is less than the first preset value, the channel is an unavailable channel. In this case, it may be considered that signal strength corresponding to the data collected on the channel is weak.

S394: Combine phase values corresponding to data collected on the first device side and the second device side through a same available channel, to obtain phase values corresponding to data collected through each same available channel.

Combining phase values corresponding to data collected on the first device side and the second device side through a same available channel is adding the phase values corresponding to the data collected on the first device side and the second device side through the same available channel. For example, a phase value corresponding to data collected through the first channel is $\phi_{T1i} + \phi_{R1i}$. A phase value corresponding to data collected through the second channel is $\phi_{T2j} + \phi_{R2j}$ and/or $\phi_{T3k} + \phi_{R3k}$. A phase value corresponding to data collected through the third channel is $\phi_{T4m} + \phi_{R4m}$.

S395: Unwrap the phase values corresponding to the data collected through each same available channel, to obtain the unwrapped phase values corresponding to the data collected through each same available channel.

S396: Fit the unwrapped phase values corresponding to the data collected through each same available channel, to obtain a fitted curve.

For example, S396 may be implemented according to a sequence piecewise linear algorithm. Steps of the sequence piecewise linear algorithm are as follows.

Step 1: Segment a phase curve. The phase curve is a curve of a relationship between a phase and a channel.

It is assumed that a length of an original sequence is N, the sequence is divided into N/2 segments at an initial stage, and two adjacent points are connected and combined into one segment. In this case, the obtained multi-segment broken lines are naturally an optimal approximate phase curve, because all N points in the original sequence are on a segmented straight line.

Step 2: Continuously combine two adjacent segments, calculate a loss function between a corresponding point on a combined line segment and the point in the original sequence, and stop combining the two adjacent segments until the loss function meets a preset condition.

For example, the preset condition may be that the loss function is less than or equal to a second preset value.

For example, the loss function may be a sum of euclidean distances between a corresponding point on a combined line segment and the point in the original sequence.

If a plurality of line segments are obtained in Step 2, Step 3 further needs to be performed.

Step 3: Select an optimal line segment, that is, the optimal line segment is the fitted curve in S366.

For example, an average value of amplitudes corresponding to a plurality of channels corresponding to each of the plurality of line segments is first calculated, and a line segment corresponding to a plurality of channels whose average value of amplitudes is the largest is determined as the optimal line segment.

S397: Determine the distance between the first device and the second device based on the fitted curve obtained in S396.

For example, the distance between the first device and the second device is obtained according to a relational expression that is between the slope of the fitted curve and the distance and that is obtained in S396.

The relational expression between the slope and the distance may be as follows:

$$k = \frac{-4\pi}{c} d(\mathrm{mod}\, 2\pi),$$

where

k is the slope, and d is the distance.

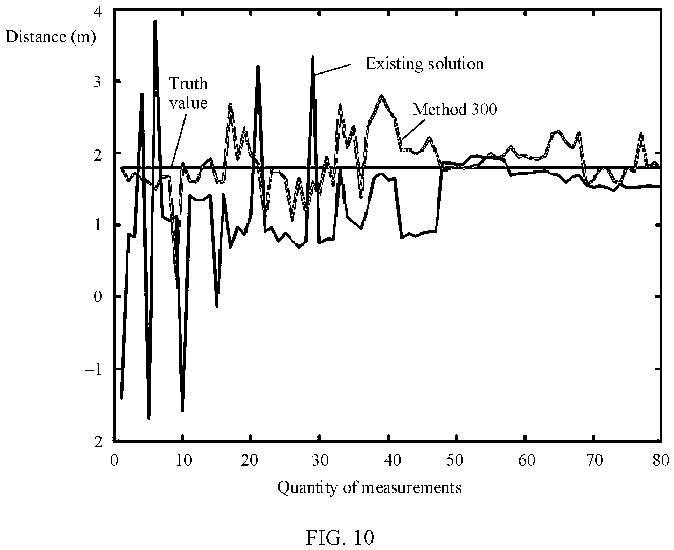

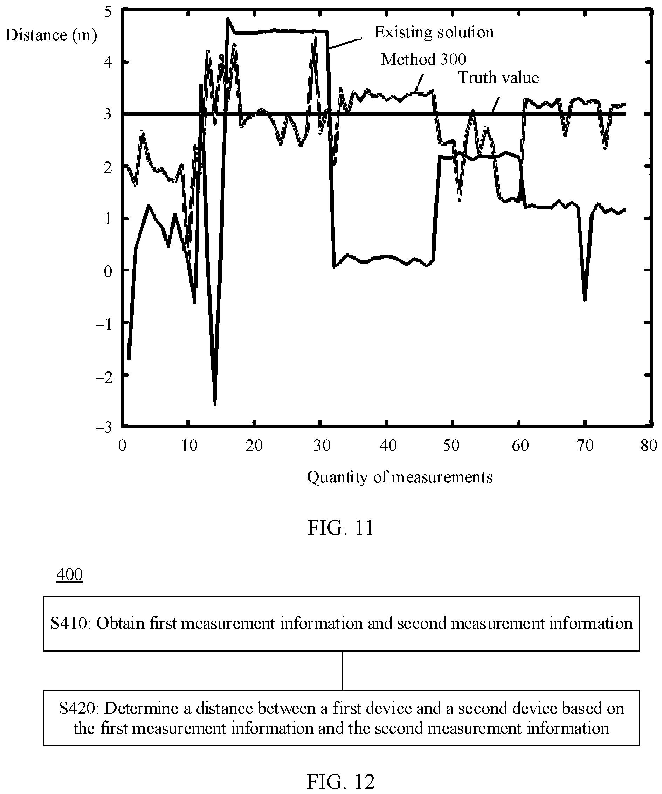

FIG. 10 and FIG. 11 are respectively schematic diagrams of linear fitting of a plurality of groups of distances between a first device and a second device that are obtained based on the method 300 and an existing solution. In FIG. 10, the distance between the first device and the second device is 1.8 m. In FIG. 11, the distance between the first device and the second device is 3 m.

It can be learned from FIG. 10 and FIG. 11 that, compared with an existing solution, ranging precision and stability of the method 300 are significantly improved.

FIG. 12 shows a ranging method 400 according to an embodiment of this application.

For example, the ranging method 400 may be performed by the first device, the second device, or the third device described above.

As shown in FIG. 12, the ranging method 400 includes S410 and S420. The following specifically describes S410 and S420.

S410: Obtain first measurement information and second measurement information.

The first measurement information includes a plurality of groups of sampled data that are obtained by a first device by sampling retroreflection measurement signals received through a plurality of antenna channels of a single antenna, and the second measurement information includes a plurality of groups of sampled data that are obtained by a second device by sampling measurement signals received through a plurality of antenna channels of each of a plurality of antennas.

Optionally, frequencies of measurement signals transmitted through a plurality of antenna channels corresponding to one of the plurality of antennas are partially the same as or different from frequencies of measurement signals transmitted through a plurality of antenna channels corresponding to another one of the plurality of antennas.

Optionally, frequencies of a plurality of measurement signals transmitted through a plurality of antenna channels corresponding to each antenna are different.

S420: Determine a distance between the first device and the second device based on the first measurement information and the second measurement information.

Optionally, the first measurement information further includes an antenna identifier and an antenna channel identifier that correspond to each group of sampled data obtained by the first device. The second measurement information further includes an antenna identifier and an antenna channel identifier that correspond to each group of sampled data obtained by the second device.

Optionally, the determining a distance between the first device and the second device based on the first measurement information and the second measurement information includes: selecting an available antenna channel of the first device based on the first measurement information, and selecting an available antenna channel of the second device based on the second measurement information, where the available antenna channel is a non-frequency selective fading channel; combining data collected by the first device and the second device through a same available antenna channel, to obtain target sampled data; fitting the target sampled data according to a sequence piecewise linear algorithm, to obtain at least one target fitted curve; and determining the distance between the first device and the second device based on the at least one target fitted curve.

Optionally, in an implementation, the selecting an available antenna channel of the first device based on the first measurement information includes: obtaining, based on the first measurement information, phase values corresponding to data collected by the first device through each antenna channel of the single antenna; performing linear fitting on the phase values corresponding to the data collected by the first device through each antenna channel of the single antenna, to obtain a fitted curve of the phase values corresponding to the data collected by the first device through each antenna channel; and selecting the available antenna channel of the first device based on a slope of the fitted curve of the phase values corresponding to the data collected by the first device through each antenna channel.

Optionally, in another implementation, the selecting an available antenna channel of the first device based on the first measurement information includes: obtaining, based on the first measurement information, amplitudes corresponding to data collected by the first device through each antenna channel of the single antenna;

calculating an average value of the amplitudes corresponding to the data collected by the first device through each antenna channel of the single antenna; and selecting the available antenna channel of the first device based on the average value of the amplitudes corresponding to the data collected by the first device through each antenna channel of the single antenna.

Optionally, in an implementation, the selecting an available antenna channel of the second device based on the second measurement information includes: obtaining, based on the second measurement information, phase values corresponding to data collected by the second device through each antenna channel of each of the plurality of antennas; performing linear fitting on the phase values corresponding to the data collected by the second device through each antenna channel of each of the plurality of antennas, to obtain a fitted curve of the phase values corresponding to the data collected by the second device through each antenna channel; and selecting the available antenna channel of the second device based on a slope of the fitted curve of the phase values corresponding to the data collected by the second device through each antenna channel.

Optionally, in another implementation, the selecting an available antenna channel of the second device based on the second measurement information includes: obtaining, based on the second measurement information, amplitudes corresponding to data collected by the second device through each antenna channel of the plurality of antennas; calculating an average value of the amplitudes corresponding to the data collected by the second device through each antenna channel of each of the plurality of antennas; and selecting the available antenna channel of the second device based on the average value of the amplitudes corresponding to the data collected by the second device through each antenna channel of each of the plurality of antennas.

Optionally, the combining data collected by the first device and the second device through a same available antenna channel, to obtain target sampled data includes: adding phase values corresponding to the data collected by the first device and the second device through the same available antenna channel, to obtain the target sampled data.

Optionally, when there are a plurality of target fitted curves, the determining the distance between the first device and the second device based on the at least one target fitted curve includes: determining a first target fitted curve of the plurality of target fitted curves as an optimal target fitted curve, where an average value of amplitudes corresponding to data that corresponds to the first target fitted curve and that is collected through a plurality of antenna channels is the largest; and determining the distance between the first device and the second device based on the optimal target fitted curve.

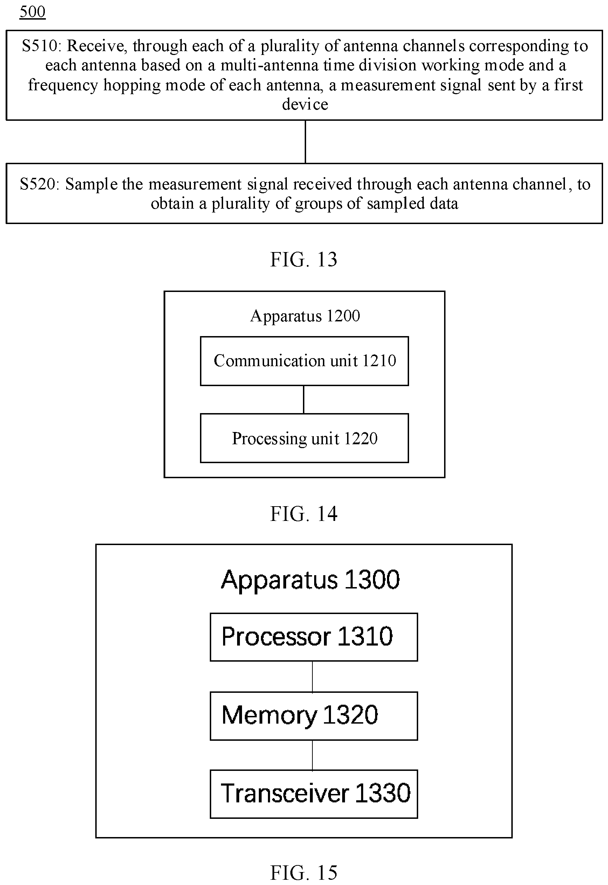

FIG. 13 shows a communication method 500 according to an embodiment of this application.

For example, the communication method 500 may be performed by the second device described above. The second device includes a plurality of antennas. Each of the plurality of antennas corresponds to a plurality of antenna channels.

As shown in FIG. 13, the ranging method 500 includes S510 and S520. The following specifically describes S510 and S520.

S510: Receive, through each of the plurality of antenna channels corresponding to each antenna based on a multi-antenna time division working mode and a frequency hopping mode of each antenna, a measurement signal sent by a first device.

The multi-antenna time division working mode may be understood as a specific working time of each antenna.

The frequency hopping mode of each antenna may be understood as a specific frequency for sending a measurement signal on each antenna.

For example, the second device may include a high-speed switch. The second device controls, by using the high-speed switch, the plurality of antennas to work in a time division manner.

For example, when an antenna needs to be switched, the second device may switch the antenna in a frequency hopping interval. In other words, antenna switching always occurs between a moment at which previous frequency exchange ends and a moment at which next frequency exchange starts.

Optionally, frequencies of measurement signals transmitted through a plurality of antenna channels corresponding to one of the plurality of antennas are partially the same as or different from frequencies of measurement signals transmitted through a plurality of antenna channels corresponding to another one of the plurality of antennas.

Optionally, frequencies of a plurality of measurement signals transmitted through a plurality of antenna channels corresponding to each antenna are different.

S520: Sample the measurement signal received through each antenna channel, to obtain a plurality of groups of sampled data.

The plurality of groups of sampled data are used to determine a distance between the first device and the second device.

Optionally, the method 500 further includes S530.

S530: Send a retroreflection measurement signal to the first device through an antenna channel of the received measurement signal based on the multi-antenna time division working mode and the frequency hopping mode of each antenna.

In some embodiments, to reduce a communication time between the first device and the second device and/or power consumption of the second device, when an antenna is in a working state, a measurement signal may be exchanged with a retroreflection measurement signal once.

For example, a first target antenna is in a working mode in a current time, and the first target antenna is in a mode in which a sent signal frequency is a first frequency. In addition, a second target antenna is in a working mode at a next period of time, and the second target antenna is in a mode in which a sent signal frequency is a second frequency. In this case, in the current time, the second device may first receive, through a first target channel corresponding to the first frequency of the first target antenna, a measurement signal sent by the first device. Then, the second device may send a retroreflection measurement signal of the measurement signal to the first device through the first target channel corresponding to the first frequency of the first target antenna. In the next period of time, the second device may first receive, through a second target channel corresponding to the second frequency of the second target antenna, a measurement signal sent by the first device. Then, the second device may send a retroreflection measurement signal of the measurement signal to the first device through the second target channel corresponding to the second frequency of the second target antenna.

The foregoing describes in detail the method provided in this application with reference to FIG. 3 to FIG. 13. The following describes in detail apparatus embodiments of this application with reference to FIG. 14 and FIG. 15. It can be understood that, to implement functions in the foregoing embodiments, the apparatuses in FIG. 14 and FIG. 15 include corresponding hardware structures and/or software modules for performing the functions. A person skilled in the art should be easily aware that this application can be implemented by using hardware or a combination of hardware and computer software in combination with the units and the method steps in the examples described in embodiments disclosed in this application. Whether a function is performed by hardware or hardware driven by computer software depends on particular application scenarios and design constraints of technical solutions.

FIG. 14 is a schematic diagram of a structure of an example of an apparatus according to an embodiment of this application.

For example, as shown in FIG. 14, the apparatus 1200 includes a communication unit 1210 and a processing unit 1220.

In an implementation, the first device, the second device, or the third device described above includes the apparatus 1200.

The communication unit 1210 is configured to obtain first measurement information and second measurement information. The first measurement information includes a plurality of groups of sampled data that are obtained by a first device by sampling retroreflection measurement signals received through a plurality of antenna channels of a single antenna. The second measurement information includes a plurality of groups of sampled data that are obtained by a second device by sampling measurement signals received through a plurality of antenna channels of each of a plurality of antennas.

The processing unit 1220 is configured to determine a distance between the first device and the second device based on the first measurement information and the second measurement information.

Optionally, the first measurement information further includes an antenna identifier and an antenna channel identifier that correspond to each group of sampled data obtained by the first device. The second measurement information further includes an antenna identifier and an antenna channel identifier that correspond to each group of sampled data obtained by the second device. The processing unit 1220 is specifically configured to: select an available antenna channel of the first device based on the first measurement information, and select an available antenna channel of the second device based on the second measurement information, where the available antenna channel is a non-frequency selective fading channel; combine data collected by the first device and the second device through a same available antenna channel, to obtain target sampled data; fit the target sampled data according to a sequence piecewise linear algorithm, to obtain at least one target fitted curve; and determine the distance between the first device and the second device based on the at least one target fitted curve.

Optionally, in an example, the processing unit 1220 is further specifically configured to: obtain, based on the first measurement information, phase values corresponding to data collected by the first device through each antenna channel of the single antenna; perform linear fitting on the phase values corresponding to the data collected by the first device through each antenna channel of the single antenna, to obtain a fitted curve of the phase values corresponding to the data collected by the first device through each antenna channel; and select the available antenna channel of the first device based on a slope of the fitted curve of the phase values corresponding to the data collected by the first device through each antenna channel.

Optionally, in another example, the processing unit 1220 is further specifically configured to: obtain, based on the first measurement information, amplitudes corresponding to data collected by the first device through each antenna channel of the single antenna; calculate an average value of the amplitudes corresponding to the data collected by the first device through each antenna channel of the single antenna; and select the available antenna channel of the first device based on the average value of the amplitudes corresponding to the data collected by the first device through each antenna channel of the single antenna.

Optionally, in an example, the processing unit 1220 is further specifically configured to: obtain, based on the second measurement information, phase values corresponding to data collected by the second device through each antenna channel of each of the plurality of antennas; perform linear fitting on the phase values corresponding to the data collected by the second device through each antenna channel of each of the plurality of antennas, to obtain a fitted curve of the phase values corresponding to the data collected by the second device through each antenna channel; and select the available antenna channel of the second device based on a slope of the fitted curve of the phase values corresponding to the data collected by the second device through each antenna channel.

Optionally, in another example, the processing unit 1220 is further specifically configured to: obtain, based on the second measurement information, amplitudes corresponding to data collected by the second device through each antenna channel of the plurality of antennas; calculate an average value of the amplitudes corresponding to the data collected by the second device through each antenna channel of each of the plurality of antennas; and select the available antenna channel of the second device based on the average value of the amplitudes corresponding to the data collected by the second device through each antenna channel of each of the plurality of antennas.

Optionally, the processing unit 1220 is further specifically configured to add phase values corresponding to the data collected by the first device and the second device through the same available antenna channel, to obtain the target sampled data.

Optionally, when there are a plurality of target fitted curves, the processing unit 1220 is further specifically configured to: determine a first target fitted curve of the plurality of target fitted curves as an optimal target fitted curve, where an average value of amplitudes corresponding to data that corresponds to the first target fitted curve and that is collected through a plurality of antenna channels is the largest; and determine the distance between the first device and the second device based on the optimal target fitted curve.

Optionally, frequencies of measurement signals transmitted through a plurality of antenna channels corresponding to one of the plurality of antennas are partially the same as or different from frequencies of measurement signals transmitted through a plurality of antenna channels corresponding to another one of the plurality of antennas.

Optionally, frequencies of a plurality of measurement signals transmitted through a plurality of antenna channels corresponding to each antenna are different.

In another implementation, the second device described above includes the apparatus 1200. The apparatus 1200 includes a plurality of antennas. Each of the plurality of antennas corresponds to a plurality of antenna channels.

The communication unit 1210 is configured to receive, through each of the plurality of antenna channels corresponding to each antenna based on a multi-antenna time division working mode and a frequency hopping mode of each antenna, a measurement signal sent by a first device. The processing unit 1220 is configured to sample the measurement signal received through each antenna channel, to obtain a plurality of groups of sampled data, where the plurality of groups of sampled data are used to determine a distance between the first device and the second device.

Optionally, frequencies of measurement signals transmitted through a plurality of antenna channels corresponding to one of the plurality of antennas are partially the same as or different from frequencies of measurement signals transmitted through a plurality of antenna channels corresponding to another one of the plurality of antennas.

Optionally, frequencies of a plurality of measurement signals transmitted through a plurality of antenna channels corresponding to each antenna are different.

Optionally, the communication unit 1210 is further configured to send a retroreflection measurement signal to the first device through an antenna channel of the received measurement signal based on the multi-antenna time division working mode and the frequency hopping mode of each antenna.

FIG. 15 is a schematic diagram of a structure of another example of an apparatus according to an embodiment of this application.

As shown in FIG. 15, the apparatus 1300 includes a processor 1310. The processor 1310 is coupled to a memory 1320. The memory 1320 is configured to store a computer program or instructions and/or data. The processor 1310 is configured to execute the computer program or the instructions stored in the memory 1320, or read the data stored in the memory 1320, to execute the method in the foregoing method embodiments.

Optionally, there are one or more processors 1310.

Optionally, there are one or more memories 1320.

Optionally, the memory 1320 and the processor 1310 may be integrated or disposed separately.

Optionally, as shown in FIG. 15, the apparatus 1300 may further include a transceiver 1330. The transceiver 1330 is configured to receive and/or send a signal. For example, the processor 1310 is configured to control the transceiver 1330 to receive and/or send a signal.

In a solution, the apparatus 1300 is configured to implement operations performed by the first device, the second device, or the third device in the foregoing method embodiments.

For example, the processor 1310 is configured to execute the computer program or the instructions stored in the memory 1320, to implement related operations of the first device in the foregoing method embodiments, for example, the method in the embodiment shown in FIG. 4, FIG. 5, or FIG. 12 performed by the first device.

For another example, the processor 1310 is configured to execute the computer program or the instructions stored in the memory 1320, to implement related operations of the second device in the foregoing method embodiments, for example, the method in the embodiment shown in FIG. 4, FIG. 5, or FIG. 13 performed by the second device.

For another example, the processor 1310 is configured to execute the computer program or the instructions stored in the memory 1320, to implement related operations of the third device in the foregoing method embodiments, for example, the method in the embodiment shown in FIG. 4 or FIG. 5 performed by the third device.

It should be understood that the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example, and not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described in this specification aims to include but is not limited to these memories and any memory of another appropriate type.

The descriptions of procedures corresponding to the foregoing accompanying drawings have respective focuses. For a part of a procedure that is not described in detail, refer to related descriptions of another procedure.

An embodiment of this application further provides a computer-readable storage medium. The computer-readable storage medium stores computer instructions used to implement the method performed by the first device, the second device, or the third device in the foregoing method embodiments.

An embodiment of this application further provides a computer program product, including instructions. When the instructions are executed by a computer, the method performed by the first device, the second device, or the third device in the foregoing method embodiments is implemented.

An embodiment of this application further provides a communication system. The communication system includes the first device and the second device in the foregoing embodiments. For example, the system includes the first device and the second device in the embodiment shown in FIG. 4.

An embodiment of this application further provides a communication system. The communication system includes the third device in the foregoing embodiments. For example, the system includes the third device in the embodiment shown in FIG. 4.

For explanations and beneficial effects of related content of any one of the apparatuses provided above, refer to the corresponding method embodiment provided above. Details are not described herein again.

In the several embodiments provided in this application, it should be understood that the disclosed apparatuses and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A ranging method, wherein the method comprises:

obtaining first measurement information and second measurement information, wherein the first measurement information comprises a plurality of groups of sampled data that are obtained by a first device by sampling retroreflection measurement signals received through a plurality of antenna channels of a single antenna, and the second measurement information comprises a plurality of groups of sampled data that are obtained by a second device by sampling measurement signals received through a plurality of antenna channels of each of a plurality of antennas; and

determining a distance between the first device and the second device based on the first measurement information and the second measurement information.

2. The method according to claim 1, wherein the first measurement information further comprises an antenna identifier and an antenna channel identifier that correspond to each group of sampled data obtained by the first device, and the second measurement information further comprises an antenna identifier and an antenna channel identifier that correspond to each group of sampled data obtained by the second device; and

the determining a distance between the first device and the second device based on the first measurement information and the second measurement information comprises:

selecting an available antenna channel of the first device based on the first measurement information, and selecting an available antenna channel of the second device based on the second measurement information, wherein the available antenna channel is a non-frequency selective fading channel;
combining data collected by the first device and the second device through a same available antenna channel, to obtain target sampled data;
fitting the target sampled data according to a sequence piecewise linear algorithm, to obtain at least one target fitted curve; and
determining the distance between the first device and the second device based on the at least one target fitted curve.

3. The method according to claim 2, wherein the selecting an available antenna channel of the first device based on the first measurement information comprises:

obtaining, based on the first measurement information, phase values corresponding to data collected by the first device through each antenna channel of the single antenna;
performing linear fitting on the phase values corresponding to the data collected by the first device through each antenna channel of the single antenna, to obtain a fitted curve of the phase values corresponding to the data collected by the first device through each antenna channel; and
selecting the available antenna channel of the first device based on a slope of the fitted curve of the phase values corresponding to the data collected by the first device through each antenna channel.

4. The method according to claim 2, wherein the selecting an available antenna channel of the first device based on the first measurement information comprises:

obtaining, based on the first measurement information, amplitudes corresponding to data collected by the first device through each antenna channel of the single antenna;

calculating an average value of the amplitudes corresponding to the data collected by the first device through each antenna channel of the single antenna; and

selecting the available antenna channel of the first device based on the average value of the amplitudes corresponding to the data collected by the first device through each antenna channel of the single antenna.

5. The method according to any one of claims 2 to 4, wherein the selecting an available antenna channel of the second device based on the second measurement information comprises:

obtaining, based on the second measurement information, phase values corresponding to data collected by the second device through each antenna channel of each of the plurality of antennas;

performing linear fitting on the phase values corresponding to the data collected by the second device through each antenna channel of each of the plurality of antennas, to obtain a fitted curve of the phase values corresponding to the data collected by the second device through each antenna channel; and

selecting the available antenna channel of the second device based on a slope of the fitted curve of the phase values corresponding to the data collected by the second device through each antenna channel.

6. The method according to any one of claims 2 to 4, wherein the selecting an available antenna channel of the second device based on the second measurement information comprises:

obtaining, based on the second measurement information, amplitudes corresponding to data collected by the second device through each antenna channel of the plurality of antennas;

calculating an average value of the amplitudes corresponding to the data collected by the second device through each antenna channel of each of the plurality of antennas; and

selecting the available antenna channel of the second device based on the average value of the amplitudes corresponding to the data collected by the second device through each antenna channel of each of the plurality of antennas.

7. The method according to any one of claims 2 to 6, wherein the combining data collected by the first device and the second device through a same available antenna channel, to obtain target sampled data comprises:

adding phase values corresponding to the data collected by the first device and the second device through the same available antenna channel, to obtain the target sampled data.

8. The method according to any one of claims 2 to 7, wherein when there are a plurality of target fitted curves, the determining the distance between the first device and the second device based on the at least one target fitted curve comprises:

determining a first target fitted curve of the plurality of target fitted curves as an optimal target fitted curve, wherein an average value of amplitudes corresponding to data that corresponds to the first target fitted curve and that is collected through a plurality of antenna channels is the largest; and

determining the distance between the first device and the second device based on the optimal target fitted curve.

9. The method according to any one of claims 1 to 8, wherein frequencies of measurement signals transmitted through a plurality of antenna channels corresponding to one of the plurality of antennas are partially the same as or different from frequencies of measurement signals transmitted through a plurality of antenna channels corresponding to another one of the plurality of antennas.

10. The method according to any one of claims 1 to 9, wherein frequencies of a plurality of measurement signals transmitted through a plurality of antenna channels corresponding to each antenna are different.

11. A communication method, wherein the method is applied to a second device, the second device comprises a plurality of antennas, each of the plurality of antennas corresponds to a plurality of antenna channels, and the method comprises:

receiving, through each of the plurality of antenna channels corresponding to each antenna based on a multi-antenna time division working mode and a frequency hopping mode of each antenna, a measurement signal sent by a first device; and

sampling the measurement signal received through each antenna channel, to obtain a plurality of groups of sampled data, wherein the plurality of groups of sampled data are used to determine a distance between the first device and the second device.

**12.** The method according to claim 11, wherein frequencies of measurement signals transmitted through a plurality of antenna channels corresponding to one of the plurality of antennas are partially the same as or different from frequencies of measurement signals transmitted through a plurality of antenna channels corresponding to another one of the plurality of antennas.

**13.** The method according to claim 11 or 12, wherein frequencies of a plurality of measurement signals transmitted through a plurality of antenna channels corresponding to each antenna are different.

**14.** The method according to any one of claims 11 to 13, wherein the method further comprises:
sending a retroreflection measurement signal to the first device through an antenna channel of the received measurement signal based on the multi-antenna time division working mode and the frequency hopping mode of each antenna.

**15.** A communication apparatus, comprising a processor, configured to execute a computer program stored in a memory, to enable the apparatus to perform the communication method according to any one of claims 11 to 14.

**16.** A ranging apparatus, comprising a processor, configured to execute a computer program stored in a memory, to enable the apparatus to perform the ranging method according to any one of claims 1 to 10.

**17.** A computer-readable storage medium, wherein the computer-readable storage medium stores a computer program, and when the computer program is run on a computer, the computer is enabled to perform the communication method according to any one of claims 1 to 10 or the ranging method according to any one of claims 11 to 14.

**18.** A chip, comprising at least one processor and an interface circuit, wherein the interface circuit is configured to provide program instructions or data for the at least one processor, and the at least one processor is configured to execute the program instructions to implement the communication method according to any one of claims 1 to 10 or the ranging method according to any one of claims 11 to 14.

**19.** A communication system, comprising a first device and a second device, wherein the second device is configured to perform the communication method according to any one of claims 1 to 10.

Unwrapped phase

FIG. 2

FIG. 3

| First device | Second device | Third device |
|---|---|---|

S310: Ranging request information →

S320: Response information of the ranging request information ←

S330: Exchange signals for the first time

S340: Exchange signals for the second time

S350: Exchange signals for the third time

S360: Exchange signals for the fourth time

S370: First ranging information →

S380: Second ranging information →

S390: Obtain a distance between the first device and the second device based on the first measurement information and the second measurement information

FIG. 4

First
device

Second
device

S331: First frequency mixing signal

S332: Input the first
frequency mixing signal
to a second oscillator, to
demodulate the first
frequency mixing signal
to obtain a second signal

S333: Sample the second
signal, to obtain a first
group of sampled data on
a second device side

S334: First retroreflection frequency mixing signal

S335: Input the first
retroreflection
frequency mixing signal
to a first oscillator, to
demodulate the first
retroreflection
frequency mixing signal
to obtain a third signal

S336: Sample the third
signal, to obtain a first
group of sampled data
on a first device side

FIG. 5

FIG. 6

390

S391: Separate, based on data collected on a first device side and data collected on a second device side, a phase value of each piece of data collected on the first device side and a phase value of each piece of data collected on the second device side

S392: Separately fit phase values of data that corresponds to each channel and that is collected on the first device side and the second device side, to obtain a fitted curve

S393: Select an available channel based on the fitted curve in S392

S394: Combine phase values corresponding to data collected on the first device side and the second device side through a same available channel, to obtain phase values corresponding to data collected through each same available channel

S395: Unwrap the phase values corresponding to the data collected through each same available channel, to obtain the unwrapped phase values corresponding to the data collected through each available channel

S396: Fit the unwrapped phase values corresponding to the data collected through each available channel, to obtain a fitted curve

S397: Determine a distance between a first device and a second device based on the fitted curve obtained in S396

FIG. 7

Original phase (dashed line)/Segmentation representation (solid line)

FIG. 8

FIG. 9

FIG. 10

FIG. 11

400

S410: Obtain first measurement information and second measurement information

S420: Determine a distance between a first device and a second device based on the first measurement information and the second measurement information

FIG. 12

500

| S510: Receive, through each of a plurality of antenna channels corresponding to each antenna based on a multi-antenna time division working mode and a frequency hopping mode of each antenna, a measurement signal sent by a first device |
| --- |

| S520: Sample the measurement signal received through each antenna channel, to obtain a plurality of groups of sampled data |
| --- |

FIG. 13

| Apparatus 1200 |
| --- |
| Communication unit 1210 |
| Processing unit 1220 |

FIG. 14

| Apparatus 1300 |
| --- |
| Processor 1310 |
| Memory 1320 |
| Transceiver 1330 |

FIG. 15

## INTERNATIONAL SEARCH REPORT

| International application No. |
|---|
| **PCT/CN2022/126464** |

**A. CLASSIFICATION OF SUBJECT MATTER**

G01S 5/08(2006.01)i

According to International Patent Classification (IPC) or to both national classification and IPC

**B. FIELDS SEARCHED**

Minimum documentation searched (classification system followed by classification symbols)

G01S5/-;H04B7/-;H04L27/-;H04W

Documentation searched other than minimum documentation to the extent that such documents are included in the fields searched

Electronic data base consulted during the international search (name of data base and, where practicable, search terms used)

CNPAT; CNKI; WPI; EPODOC: 华为, 测距, 距离, 测量, 确定, 计算, 多, 至少, 天线, 信道, 通道, 频点, 频率点, 频段, 子带, 跳频, 相位, 差, 衰落, 频率 s 选择, range, ranging, distance, measur+, determin+, calculat+, multi+, antenna?, channel?, frequency, subband?, sub-band?, hop+, phase, difference, select+, fad+

**C. DOCUMENTS CONSIDERED TO BE RELEVANT**

| Category* | Citation of document, with indication, where appropriate, of the relevant passages | Relevant to claim No. |
|---|---|---|
| X | CN 111505571 A (TEXAS INSTRUMENTS INC.) 07 August 2020 (2020-08-07) description, paragraphs [0023]-[0032], and figures 6-8 | 1,9-19 |
| A | CN 110749859 A (TSINGHUA UNIVERSITY) 04 February 2020 (2020-02-04) entire document | 1-19 |
| A | CN 109462886 A (MINZU UNIVERSITY OF CHINA et al.) 12 March 2019 (2019-03-12) entire document | 1-19 |
| A | CN 1281553 A (ERICSSON INC.) 24 January 2001 (2001-01-24) entire document | 1-19 |
| A | US 2005237953 A1 (CARRENDER, Curtis Lee et al.) 27 October 2005 (2005-10-27) entire document | 1-19 |
| A | US 2007232339 A1 (SAMSUNG ELECTRONICS CO., LTD.) 04 October 2007 (2007-10-04) entire document | 1-19 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 December 2022** | **29 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/126464**

| Patent document cited in search report | | | Publication date (day/month/year) | Patent family member(s) | | | Publication date (day/month/year) |
|---|---|---|---|---|---|---|---|
| CN | 111505571 | A | 07 August 2020 | US | 2020209337 | A1 | 02 July 2020 |
| | | | | US | 2022091216 | A1 | 24 March 2022 |
| CN | 110749859 | A | 04 February 2020 | CN | 110749859 | B | 29 June 2021 |
| CN | 109462886 | A | 12 March 2019 | CN | 109462886 | B | 23 October 2020 |
| CN | 1281553 | A | 24 January 2001 | BR | 9813458 | A | 10 October 2000 |
| | | | | DE | 69812161 | D1 | 17 April 2003 |
| | | | | JP | 2002504664 | A | 12 February 2002 |
| | | | | EP | 1038188 | A1 | 27 September 2000 |
| | | | | TW | 396691 | B | 01 July 2000 |
| | | | | AU | 1594499 | A | 28 June 1999 |
| | | | | US | 6243587 | B1 | 05 June 2001 |
| | | | | WO | 9930181 | A1 | 17 June 1999 |
| | | | | CA | 2313485 | A1 | 17 June 1999 |
| | | | | EP | 1038188 | B1 | 12 March 2003 |
| | | | | CN | 1311242 | C | 18 April 2007 |
| | | | | JP | 3383797 | B2 | 04 March 2003 |
| US | 2005237953 | A1 | 27 October 2005 | EP | 1869493 | A1 | 26 December 2007 |
| | | | | WO | 2006099148 | A1 | 21 September 2006 |
| | | | | US | 7580378 | B2 | 25 August 2009 |
| US | 2007232339 | A1 | 04 October 2007 | KR | 20070099459 | A | 09 October 2007 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111287396